# EUROPÄISCHE PATENTANMELDUNG

(11) **EP 1 097 847 A2**
(43) Veröffentlichungstag der Anmeldung: **09.05.2001**
(21) Anmeldenummer: 00123816.1
(22) Anmeldetag: 02.11.2000
(51) Int. Cl.: B60R 21/02

(54) **Sicherheitseinrichtung für ein Kraftfahrzeug mit einer Fussauflage**

(30) Priorität: 06.11.1999 DE 19953481
(71) Anmelder: Volkswagen Aktiengesellschaft, 38436 Wolfsburg (DE)
(72) Erfinder: Sinnhuber, Ruprecht, Dipl.-Ing., 38518 Gifhorn (DE)

(57) **Zusammenfassung**

Einer als Fußablage in einem Kraftfahrzeug dienenden Lastverteilerplatte (3), die bei einem Fahrzeugaufprall zum Schutz des Fußes automatisch angehoben wird, ist ein Antrieb (8) für eine gewollte Einstellung ihrer Höhenlage (Komforthöhe) zugeordnet.

## Beschreibung

Die Erfindung betrifft eine Sicherheitseinrichtung gemäß dem Oberbegriff des Patentanspruchs 1.

Sicherheitseinrichtungen der beschriebenen Art sind aus der gattungbildenden DE 197 27 598 A1 in mehreren Ausführungen bekannt. Gemeinsam ist ihnen, daß die Lastverteilerplatte beim Auftreten eines Längsaufpralls des Fahrzeugs selbsttätig angehoben wird, wodurch, wie in der Beschreibungseinleitung der zitierten Schrift ausgeführt, ein Schutz des Fußes des Fahrzeuginsassen, und zwar insbesondere der Fersenpartie, gegen schwere Verletzungen erreicht wird. Dabei kann die Auslösung dieses Hubvorgangs der Lastverteilerplatte durch einen Sensor erfolgen, der den Längsaufprall im Augenblick seines Auftretens oder kurz vorher erfaßt; die Auslösung kann jedoch auch durch Verformung eines der Lastverteilerplatte benachbarten Bauteils, insbesondere einer Spritzwand des Fahrzeugs, erfolgen. Bezüglich Einzelheiten kann auch hier auf die eingangs zitierte Schrift verwiesen werden.

Der Erfindung liegt nun die Aufgabe zugrunde, die beschriebene Sicherheitseinrichtung so weiter zu bilden, daß sie nicht nur Sicherheitsgesichtspunkten, sondern auch dem Gesichtspunkt des Fahrkomforts eines Fahrzeuginsassen Rechnung trägt, der einen Sitz einnimmt, dem die Fußablage zugeordnet ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung gestattet also gleichsam eine Voreinstellung der Lastverteilerplatte zumindest in senkrechter Richtung auf einen Wert, der dem Fahrzeuginsassen zur Ablage des Fußes angenehm ist, d.h. auf eine Komforthöhe. Sofern die Komforthöhe nicht bereits der maximal einstellbaren Höhenlage der Lastverteilerplatte entspricht, hat das Auftreten eines Längsaufpralls des Fahrzeugs dann ausgehend von der definierten Komforthöhe eine weitere Vergrößerung der Höhenlage der Lastverteilerplatte zur Folge.

Wie schon diese Beschreibung der wirkungsweise der Erfindung erkennen läßt, hat die durch den manuell oder motorisch betätigbaren zusätzlichen Antrieb gegebene Möglichkeit der Einstellung einer Komforthöhe auch Vorteile unter Sicherheitsaspekten: Bei Beginn eines Längsaufpralls befindet sich der Fuß bereits in einer etwas angehobenen Stellung, so daß bereits dadurch die Gefahr gefährlicher Fußverletzungen vermindert ist.

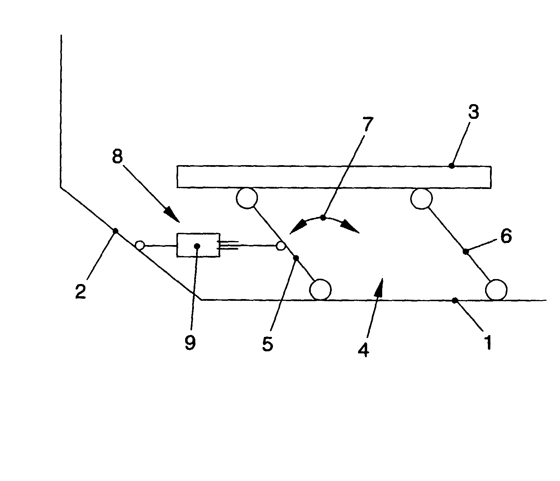

Ein Ausführungsbeispiel der Erfindung wird im folgenden anhand der Zeichnung erläutert, die einen senkrechten Längsschnitt durch den vorderen Bereich des Fahrgastraums eines Kraftfahrzeugs wiedergibt.

Von dem Fahrzeug sind lediglich der Fahrzeugboden 1 und die Spritzwand 2 angedeutet. Die Lastverteilerplatte 3 der Fußablage ist mittels eines Mehrgelenkscharniers 4 mit mehreren Paaren von Gelenkhebeln 5 und 6 am Fahrzeugboden abgestützt. Wie unmittelbar ersichtlich, sind die Gelenkhebel 5 und 6 derart gegen den Boden 1 geneigt, daß sie mit diesem in Richtung auf die Spritzwand 2 offene Winkel bilden. Bei Schwenkbewegungen der Gelenkhebel 5 und 6 im Sinne des Doppelpfeils 7 erfolgt demgemäß eine Höhenverstellung der Lastverteilerplatte 3; die Neigung dieser Platte bleibt bei gleicher Länge aller Gelenkhebel 5 und 6 unverändert, während aber die Lage der Platte 3 in Längsrichtung des Fahrzeugs, d.h. in der Zeichenebene, sich ebenfalls ändert.

In diesem Ausführungsbeispiel ist angenommen, daß zum Erkennen eines gefährlichen Fahrzeugaufpralls die dann auftretende Verformung der Spritzwand 2 herangezogen wird. Dies geschieht über die allgemein mit 8 bezeichnete, dann starre, d.h. in ihrer Länge unveränderliche Einrichtung. Sie ist gelenkig eingespannt zwischen Spritzwand 2 und zumindest einem der Gelenkhebel des Gelenkhebelpaares 5 und bewirkt bei einer in Richtung nach hinten (d.h. nach rechts in der Zeichnung) erfolgenden Verlagerung des ihre Anlenkung tragenden Bereichs der Spritzwand 2 Schwenkbewegungen der Gelenkhebel 5 und 6 im Uhrzeigersinn, d.h. eine Vergrößerung der Höhenlage der Lastverteilerplatte 3.

Die Einrichtung 8 enthält als wesentlichen Bestandteil einer durch sie zugleich gebildeten Betätigungseinrichtung den Elektromotor 9 sowie eine Mutter-Gewindestangen-Kombination, so daß bei Ansteuerung des für zwei Drehrichtungen ausgelegten Elektromotors 9 durch Verlängerung oder Verkürzung der Längenabmessung der Einrichtung 8 gewollt Schwenkbewegungen der Gelenkhebel 5 und 6 und damit Höhenverstellungen der Lastverteilerplatte 3 möglich sind. Damit ist dem Fahrzeuginsassen auf dem Sitz, dem diese Fußablage zugeordnet ist, also die Möglichkeit gegeben, Höhenlage und zugleich Position in Längsrichtung der Lastverteilerplatte 3 im Sinne der Erzielung eines hohen Sitzkomforts einzustellen bzw. - bezogen auf das Auftreten eines Aufprallunfalls - voreinzustellen. Tritt nun ein derartiger Aufprall auf, überträgt die selbsthemmend ausgelegte Einrichtung 8 gleichsam als starre Stütze wirkend die beschriebenen Deformationen der Spritzwand 2 auf den Gelenkhebel 5, so daß die Höhenlage der Lastverteilerplatte 3 vergrößert wird.

Verständlicherweise muß dafür gesorgt werden, daß unabhängig von der jeweiligen Komforteinstellung der Neigungswinkel der Gelenkhebel 5 und 6 nie über 90° verstellt werden darf, da anderenfalls bei einem Längsaufprall eine erneute Absenkung der Lastverteilerplatte 3 erfolgen würde.

Mit der Erfindung ist also mit minimalem Aufwand eine gattungsgemäße Sicherheitseinrichtung geschaffen, die Gesichtspunkten sowohl der Insassensicherheit als auch des Komforts für die Insassen Rechnung trägt.

## Patentansprüche

1. Sicherheitseinrichtung für ein Kraftfahrzeug mit einer Fußablage, die als in Abhängigkeit von einem Fahrzeugaufprall anhebbare Lastverteilerplatte ausgebildet ist, **dadurch gekennzeichnet,** daß der Lastverteilerplatte (3) ein Antrieb (8) für eine gewollte Einstellung zumindest ihrer Höhenlage zugeordnet ist.

2. Sicherheitseinrichtung nach Anspruch 1, **dadurch gekennzeichnet,** daß die Lastverteilerplatte (3) am Fahrzeugboden (1) mittels eines Mehrgelenkscharniers (4) mit Gelenkhebeln (5,6) abgestützt ist, die mit dem Boden (1) in Richtung auf eine Spritzwand (2) des Fahrzeugs offene Winkel bildend geneigt sind, so daß mit Hubbewegungen der Lastverteilerplatte (3) Längsbewegungen derselben verbunden sind, und daß der Antrieb (8) für die gewollte Einstellung als Schwenkantrieb an zumindest einem der Gelenkhebel (5,6) angreift.

3. Sicherheitseinrichtung nach Anspruch 2, **dadurch gekennzeichnet,** daß der Antrieb eine längenveränderbare, selbsthemmende Einrichtung (8) ist, die sich zwischen der Spritzwand (2) und dem einen Gelenkhebel (5,6) erstreckt.

4. Sicherheitseinrichtung nach Anspruch 3, **gekennzeichnet durch** eine derart gewählte Maximallänge der Einrichtung (8), daß bei einem Fahrzeugaufprall die Gelenkhebel (5,6) maximal in senkrechte Stellungen verschwenkt werden.
